# DEMANDE DE BREVET EUROPEEN

(11) **EP 4 427 920 A1**
(43) Date de publication de la demande: **11.09.2024**
(21) Numéro de dépôt: 24161550.9
(22) Date de dépôt: 05.03.2024
(51) Int. Cl.: B32B 1/08, A62C 2/06, B32B 7/12, B32B 15/20, B32B 27/30, C09J 7/28, C09J 133/08

(54) **DISPOSITIF D'OBTURATION ADHESIF REFRACTAIRE D'UNE OUVERTURE TRAVERSANTE D'UN ELEMENT DE BATIMENT OU DE VEHICULE, PROCEDE DE FABRICATION ET INSTALLATION POUR LA MISE EN OEUVRE DE CE PROCEDE**

(30) Priorité: 09.03.2023 FR 2302200
(71) Demandeur: ADHEX TECHNOLOGIES, 21300 Chenôve (FR)
(72) Inventeur: DURAND, Hervé, 21000 DIJON (FR); MOUSSIE, Lilian, 21000 DIJON (FR); BEAUGEARD, Vincent, 21000 DIJON (FR)
(74) Mandataire: Cabinet Bleger-Rhein-Poupon

(57) **Abrégé**

L'invention concerne un dispositif d'obturation adhésif réfractaire (1) d'une ouverture traversante (O) que comporte un élément (E) d'un bâtiment ou un élément (E) d'un véhicule, ce dispositif d'obturation adhésif réfractaire (1) comporte, d'une part, une pastille (2), qui est en un matériau métallique, qui présente une épaisseur comprise entre 10 microns et 150 microns, et qui présente une première face (20) ainsi qu'une deuxième face (21), d'autre part, un adhésif (3), qui couvre au moins une partie de la première face (20) de la pastille (2), et qui est configuré pour adhérer sur ledit élément (E), et, d'autre part encore, un revêtement intumescent (4) qui couvre au moins une partie de la deuxième face (21) de la pastille (2).

L'invention concerne, encore, un procédé de fabrication d'un tel dispositif d'obturation adhésif réfractaire (1) ainsi qu'une installation pour mettre en oeuvre ce procédé.

## Description

L'invention concerne un dispositif d'obturation adhésif réfractaire d'une ouverture traversante d'un élément de bâtiment ou de véhicule. Cette invention concerne, également, un procédé de fabrication d'un tel dispositif d'obturation adhésif réfractaire ainsi qu'une installation pour la mise en oeuvre de ce procédé de fabrication.

La présente invention concerne le domaine de la fabrication des dispositifs d'obturation adhésifs réfractaires qui sont configurés pour obturer une ouverture traversante que comporte un élément (par exemple un mur ou une cloison) d'un bâtiment ou un élément (par exemple un élément de carrosserie, un élément de protection ou un élément de confinement, notamment des batteries) d'un véhicule automobile, ceci en vue, d'une part, d'empêcher le passage, au travers de cette ouverture traversante, d'un fluide plus particulièrement de l'eau et/ou des fumées, notamment résultant d'une incendie et, d'autre part encore, pour résister à des températures élevées, notamment résultant d'un incendie.

On connait, d'ores et déjà, des dispositifs d'obturation adhésifs qui comportent, d'une part, une pastille qui est réalisée au moins en partie en fibres, notamment de verre, et, d'autre part, un adhésif, qui couvre au moins une partie d'une face de la pastille, et qui est configuré pour adhérer sur un élément d'un bâtiment ou d'un véhicule, plus particulièrement sur une bordure, que comporte un tel élément, et qui délimite une ouverture traversante que présente cet élément.

Ces dispositifs d'obturation présentent de nombreux inconvénients, notamment en ce qui concerne leur tenue à des hautes températures comme celles d'un incendie. Un premier inconvénient consiste en ce que, lorsqu'un tel dispositif d'obturation est soumis à la chaleur dégagée par un incendie, l'adhésif perd de ses propriétés adhésives ce qui le rend perméable aux fumées dégagées par l'incendie qui peuvent, alors, traverser l'adhésif ainsi que l'ouverture traversante. Dans le pire des cas et sous l'effet de la chaleur, ledit dispositif d'obturation se décolle au moins en partie et ouvre, alors, au moins en partie, ladite ouverture traversante ce qui, là encore, autorise les fumées à traverser cette ouverture traversante. Un autre inconvénient consiste en ce que le dispositif d'obturation est particulièrement fin de sorte que, lorsqu'il est soumis à une flamme nue telle que celle d'un incendie, ce dispositif d'obturation est percé en quelques secondes à peine ce qui permet aux fumées, voire aux flammes, de traverser l'ouverture traversante. Ces fumées peuvent, alors, pénétrer à l'intérieur de l'habitacle du véhicule et incommoder les occupants du véhicule tandis que les flammes peuvent se propager rapidement au reste du véhicule mettant en danger ses occupants. Encore un autre inconvénient consiste en ce que, lorsque le dispositif d'obturation est décollé ou percé, de l'eau est susceptible de traverser l'ouverture traversante et de pénétrer à l'intérieur de l'élément de véhicule qui comporte l'ouverture traversante et qui, s'il contient des batteries comme dans le cas d'un véhicule électrique, risque de provoquer une explosion.

Par le document GB1402424 on connait une composition d'étanchéité. Ce document divulgue un dispositif d'obturation qui comporte un substrat sous forme de feuille ayant, sur au moins une surface, un revêtement de masse adhésive thermoplastique sensible à la pression. Cette masse adhésive peut inclure un matériau intumescent. La présence de ce matériau intumescent dans la masse adhésive réduit notablement les propriétés adhésives du dispositif d'obturation sur un support. De plus, en cas de forte chaleur ou d'incendie, d'une part, la masse adhésive perd de ses propriétés adhésives ce qui la rend perméable aux fumées qui peuvent traverser la masse adhésive, voire une ouverture traversante obturée par le dispositif d'obturation, d'autre part, le matériau intumescent gonfle à l'intérieur de la masse adhésive, réduit la place occupée par l'adhésif dans la masse adhésive, diminue l'adhérence du dispositif d'obturation sur le support (ceci avec les effets mentionnés ci-dessus), voire provoque le décollement du dispositif d'obturation par rapport au support (ceci avec les effets mentionnés ci-dessus).

La présente invention se veut de remédier aux inconvénients des dispositifs d'obturation adhésifs de l'état de la technique.

A cet effet, l'invention concerne un dispositif d'obturation adhésif réfractaire d'une ouverture traversante que comporte un élément d'un bâtiment ou un élément d'un véhicule. Ce dispositif d'obturation adhésif réfractaire comporte, d'une part, une pastille, qui est en un matériau métallique, qui présente une épaisseur comprise entre 10 microns et 150 microns, et qui présente une première face ainsi qu'une deuxième face, d'autre part, un adhésif, qui couvre au moins une partie de la première face de la pastille, et qui est configuré pour adhérer sur ledit élément, et, d'autre part encore, un revêtement intumescent qui couvre au moins une partie de la deuxième face de la pastille.

Selon une autre caractéristique, l'adhésif, d'une part, est à base d'au moins un polymère acrylique réticulable et, d'autre part, présente une épaisseur comprise entre 20 et 120 microns, de préférence comprise entre 30 et 100 microns.

Encore une autre caractéristique concerne le fait que l'adhésif présente une perméabilité à la vapeur d'eau inférieure à 200g/m²/24h et/ou à 5 Perms.

Selon une autre caractéristique, le revêtement intumescent comporte, d'une part, au moins un composé chimique qui est un acide ou qui est un catalyseur acide ou qui génère au moins un acide sous l'effet d'une température supérieure à 150°C, d'autre part, au moins un composé chimique qui génère au moins un composé carboné sous l'action de l'acide, et, d'autre part encore, au moins un composé chimique qui génère des gaz sous l'effet de la chaleur.

Une caractéristique additionnelle concerne le fait que le revêtement intumescent présente une épaisseur comprise entre 50 microns et 600 microns, de préférence comprise entre 100 microns et 250 microns.

L'invention concerne, également, un élément de véhicule, notamment de véhicule automobile, comportant, d'une part, une coque, qui est destinée à contenir au moins une batterie, qui présente au moins une ouverture traversante ainsi qu'au moins une paroi interne orientée en direction du volume interne de la coque et au moins une paroi externe orientée dans une direction opposée au volume interne, et, d'autre part, au moins un dispositif d'obturation adhésif réfractaire, qui présente au moins une partie des caractéristiques décrites ci-dessus, qui obture ladite au moins une ouverture traversante, et qui est collé sur la paroi interne et/ou sur la paroi externe de la coque.

L'invention concerne, encore, un procédé de fabrication d'un dispositif d'obturation adhésif réfractaire. Ce procédé comporte :
- une étape d'application d'un adhésif sur au moins une partie d'une première face d'un film qui est en un matériau métallique ;
- une étape de recouvrement par un revêtement intumescent d'au moins une partie d'une deuxième face du film ;
- une étape de découpe d'au moins un dispositif d'obturation adhésif réfractaire dans un ensemble qui comporte le film, l'adhésif et le revêtement intumescent.

Une caractéristique additionnelle concerne le fait que l'étape de recouvrement comporte une étape de projection, sur au moins une partie de la deuxième face du film, d'un mélange qui contient, d'une part, au moins une composition chimique intumescente et, d'autre part, de l'air, ceci sous une pression comprise entre 0,5 bars et 2 bars.

L'invention concerne, aussi, une installation qui est configurée pour mettre en oeuvre le procédé de fabrication décrit ci-dessus. Cette installation comporte, d'une part, au moins un récipient qui est configuré pour contenir une composition chimique intumescente ainsi que pour maintenir cette composition chimique intumescente sous agitation et/ou sous une pression comprise entre 2 bars et 5 bars, de préférence de l'ordre de 3 bars et, d'autre part, un système de projection, qui est raccordé audit au moins un récipient, et qui est configuré pour projeter au moins la composition chimique intumescente sous une pression comprise entre 0,5 bars et 2 bars, de préférence de l'ordre de 1 bars.

Ainsi, l'invention concerne un dispositif d'obturation adhésif réfractaire qui comporte une pastille, un adhésif et un revêtement intumescent.

Dans ce dispositif d'obturation adhésif réfractaire, d'une part, l'adhésif couvre au moins une partie de la première face de la pastille et, d'autre part, le revêtement intumescent couvre au moins une partie de la deuxième face de la pastille. L'adhésif est, donc, situé d'un côté de la pastille tandis que le revêtement intumescent est situé de l'autre côté de la pastille qui est, alors, interposée entre l'adhésif et le revêtement intumescent.

La présence de ce revêtement intumescent (qui couvre au moins une partie de la deuxième face de la pastille et qui est situé d'un côté de la pastille) présente l'avantage que, sous l'effet de la chaleur (notamment dégagée par un incendie), voire des flammes, ce revêtement intumescent gonfle et constitue, alors, une barrière qui protège l'adhésif (qui couvre au moins une partie de la première face de la pastille et qui est situé de l'autre côté de la pastille par rapport au revêtement intumescent) vis-à-vis de la chaleur, voire des flammes. Cet adhésif conserve, alors, son intégrité (notamment son imperméabilité) ce qui permet, avantageusement, d'empêcher les fumées (provoquées par l'incendie) de traverser cet adhésif et, donc, l'ouverture traversante. Cet adhésif conserve, également, ses propriétés adhésives ce qui permet, avantageusement, d'éviter tout décollement du dispositif d'obturation et, donc, toute ouverture de l'ouverture traversante et, par conséquent, toute traversée de l'ouverture traversante par des fumées, des flammes et/ou de l'eau.

La présence de ce revêtement intumescent (qui couvre au moins une partie de la deuxième face de la pastille) présente, encore, l'avantage que, sous l'effet de la chaleur (voire des flammes), ce revêtement intumescent gonfle et constitue, alors, une barrière qui protège la pastille vis-à-vis des flammes. Cette pastille résiste, alors, aux flammes et conserve son intégrité pendant plusieurs minutes (en l'occurrence pendant au moins 5 minutes) ce qui représente une durée considérablement allongée par rapport à la durée de résistance des dispositifs d'obturation de l'état de la technique.

De plus, d'une part, la pastille présente une épaisseur comprise entre 10 microns et 150 microns, et, d'autre part, le revêtement intumescent présente une épaisseur comprise entre 50 et 600 microns. Ces caractéristiques permettent, avantageusement, au dispositif d'obturation adhésif réfractaire de l'invention de présenter une flexibilité suffisante pour permettre une fabrication, un conditionnement, une délivrance et une dépose (sur un élément) de ce dispositif d'obturation, ceci de manière mécanisée, voire robotisée, plus particulièrement par l'intermédiaire d'une ventouse que comporte une installation de dépose d'un tel dispositif d'obturation adhésif réfractaire.

L'invention concerne, également, un procédé de fabrication d'un dispositif d'obturation adhésif réfractaire qui comporte une étape de recouvrement, par un revêtement intumescent, d'au moins une partie d'une deuxième face du film. En particulier, cette étape de recouvrement consiste à projeter, sur au moins une partie de la deuxième face du film, un mélange qui contient, d'une part, au moins une composition chimique intumescente et, d'autre part, de l'air, ceci sous une pression comprise entre 0,5 bars et 2 bars. Les caractéristiques de cette étape de recouvrement permettent, avantageusement, de déposer une couche d'un revêtement intumescent qui, d'une part, est fine et présente une épaisseur comprise entre 50 et 600 microns, d'autre part, est homogène et, d'autre part encore, autorise un séchage optimal de la composition chimique intumescente.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
[Fig 1] est une vue schématisée et en coupe d'un dispositif d'obturation adhésif réfractaire selon l'invention et conforme à un premier mode de réalisation.
[Fig 2] est une vue schématisée et en coupe d'un dispositif d'obturation adhésif réfractaire selon l'invention et conforme à un deuxième mode de réalisation.
[Fig 3] est une vue schématisée et de dessus d'un dispositif d'obturation adhésif réfractaire selon l'invention, conforme au deuxième mode de réalisation, et illustré figure 2.

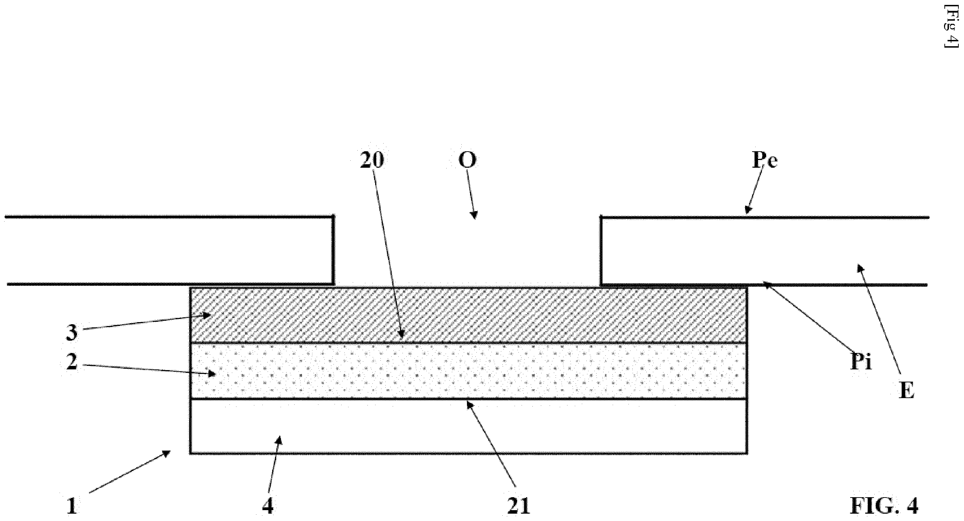

[Fig 4] est une vue schématisée et en coupe d'un élément qui comporte une ouverture traversante obturée par un dispositif d'obturation adhésif réfractaire conforme à l'invention et conforme au premier mode de réalisation.

La présente invention concerne le domaine de la fabrication des dispositifs d'obturation adhésifs réfractaires qui sont configurés pour obturer une ouverture traversante que comporte un élément d'un bâtiment ou un élément d'un véhicule.

L'invention concerne, alors, un dispositif d'obturation adhésif réfractaire 1 qui est configuré pour obturer une ouverture traversante O que comporte un élément E d'un bâtiment (plus particulièrement un mur ou une cloison) ou que comporte un élément E d'un véhicule (plus particulièrement un élément de carrosserie, un élément de protection, un élément de séparation, ou un élément de confinement, notamment un élément de confinement de batteries), plus particulièrement un élément E d'un véhicule automobile, notamment électrique.

Un tel dispositif d'obturation adhésif réfractaire 1 comporte, d'une part, une pastille 2 qui présente une première face 20 ainsi qu'une deuxième face 21.

Une telle pastille 2 est en un matériau métallique, plus particulièrement en un métal ou en un alliage métallique.

Une telle pastille présente une épaisseur comprise entre 10 microns et 150 microns, c'est-à-dire comprise entre 10*10⁻⁶m et 150*10⁻⁶m.

Selon un premier mode de réalisation, une telle pastille 2, d'une part, est en zinc ou en un alliage à base de zinc et, d'autre part, présente une épaisseur comprise entre 50 microns et 150 microns (c'est-à-dire comprise entre 50*10⁻⁶m et 150*10⁻⁶m), de préférence de l'ordre de 80 microns (c'est-à-dire de l'ordre de 80* 10⁻⁶m).

Selon un deuxième mode de réalisation, une telle pastille 2, d'une part, est en aluminium ou en un alliage d'aluminium et, d'autre part, présente une épaisseur comprise entre 20 microns et 100 microns (c'est-à-dire comprise entre 20*10⁻⁶m et 100*10⁻⁶m), de préférence comprise entre 35 microns et 50 microns (c'est-à-dire comprise entre 35*10⁻⁶m et 50*10⁻⁶m).

Selon un troisième mode de réalisation, une telle pastille 2, d'une part, est en cuivre ou en un alliage de cuivre et, d'autre part, présente une épaisseur comprise entre 10 microns et 25 microns (c'est-à-dire comprise entre 10*10⁻⁶m et 25*10⁻⁶m), de préférence de l'ordre de 18 microns (c'est-à-dire de l'ordre de 18*10⁻⁶m).

D'autre part, le dispositif d'obturation adhésif réfractaire 1 comporte un adhésif 3, qui couvre au moins une partie de la première face 20 de la pastille 2, et qui est configuré pour adhérer sur ledit élément E.

Un tel adhésif 3, d'une part, est à base d'au moins un polymère acrylique réticulable et, d'autre part, présente une épaisseur comprise entre 20 microns et 120 microns (c'est-à-dire comprise entre 20*10⁻⁶m et 120*10⁻⁶m), de préférence comprise entre 30 microns et 100 microns (c'est-à-dire comprise entre 30*10⁻⁶m et 100*10⁻⁶m).

Selon un premier mode de réalisation, l'adhésif 3 est à base d'au moins un polymère acrylique réticulable par UV (ultraviolet) et/ou à base d'au moins un polymère acrylique réticulable de type thermofusible (plus particulièrement d'un type connu sous la dénomination anglosaxonne de « hotmelt »).

Cependant et selon un deuxième mode de réalisation, l'adhésif 3 est à base d'au moins un polymère acrylique auto-réticulable, plus particulièrement par chélates métalliques (par exemple de l'aluminium acétylacétonate), notamment dont le pourcentage massique est compris entre 0,1 et 1%.

Selon une autre caractéristique, l'adhésif 3 présente une perméabilité à la vapeur d'eau (PVE ou MVTR connue sous la dénomination anglosaxonne de « Moisture Vapor Transmission Rate ») inférieure à 200g/m²/24h (plus particulièrement déterminée conformément à la norme NF EN 13726-2) et/ou à 5 Perms (plus particulièrement déterminée conformément à la norme ASTM E96/E96M).

Encore une autre caractéristique concerne le fait que l'adhésif 3 présente une résistance au fluage statique sous charge d'au moins 100 heures sous une charge de 100g par cm² de surface de collage sur verre (c'est-à-dire 1000kg par m² de surface de collage sur verre) à 23°C et à un taux d'humidité de 50%, plus particulièrement déterminée conformément à la norme AFERA 5012.

Une caractéristique additionnelle concerne le fait que l'adhésif 3 présente une résistance à l'arrachement en poussée supérieure à 60N, de préférence supérieure à 80N. Cette résistance à l'arrachement en poussée peut être déterminée en mettant en oeuvre un test connu sous la dénomination anglosaxonne de « puncture test » et/ou peut être déterminée conformément à la norme Renault 39-02-827/C.

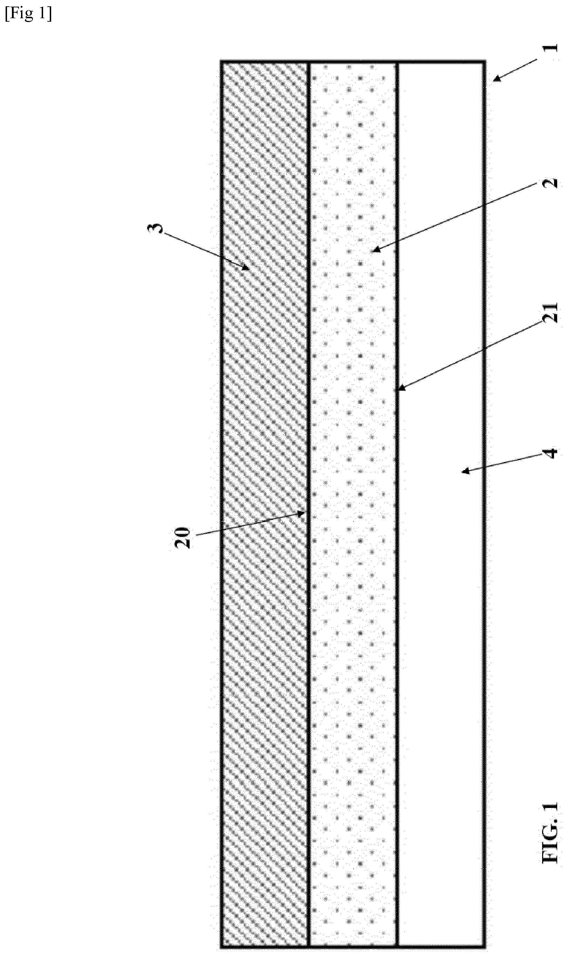

Selon un premier mode de réalisation, l'adhésif 3 couvre l'intégralité de la première face 20 de la pastille 2 comme illustré figure 1.

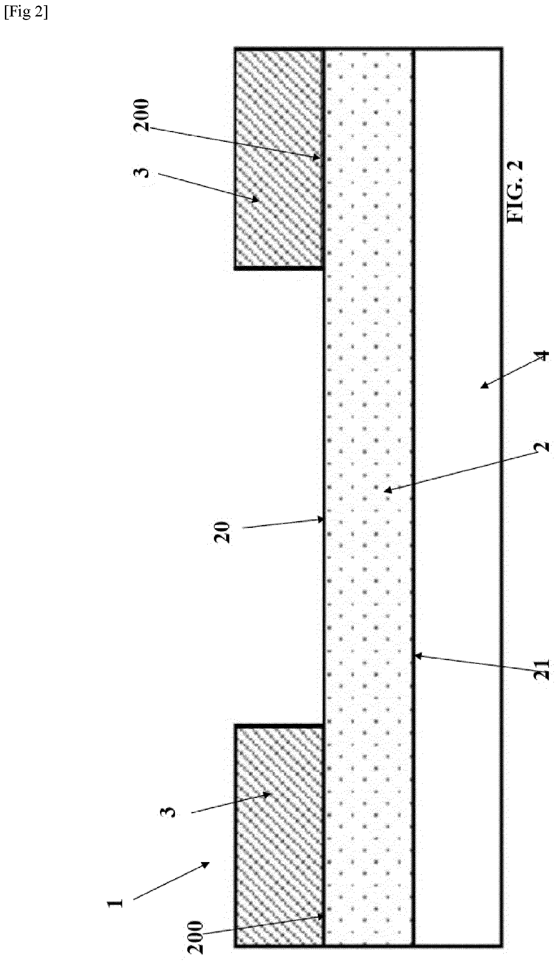

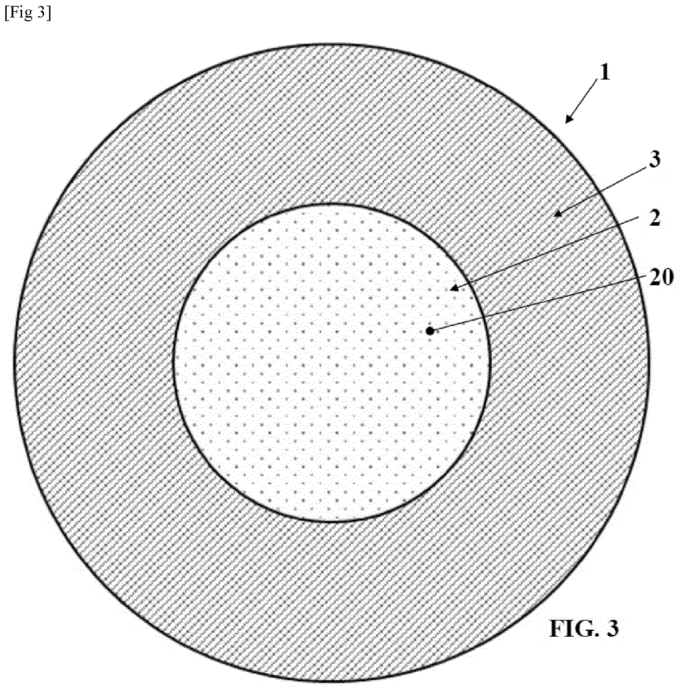

Cependant et selon un autre mode de réalisation illustré figures 2 et 3, l'adhésif 3 couvre une partie seulement de la première face 20 de la pastille 2, plus particulièrement une bordure 200 que présente cette première face 20 de la pastille 2. L'adhésif 3 adopte, alors, plus particulièrement une forme annulaire comme visible figure 3.

Quoi qu'il en soit, ladite au moins une partie de la première face 20 de la pastille 2 est couverte uniquement par ledit adhésif 3.

D'autre part encore, le dispositif d'obturation adhésif réfractaire 1 comporte un revêtement intumescent 4 qui couvre au moins une partie de la deuxième face 21 de la pastille 2.

A ce propos, on observera que ladite au moins une partie de la deuxième face 21 de la pastille 2 est couverte uniquement par ledit revêtement intumescent 4 et est, donc, dépourvue d'adhésif.

Cette caractéristique permet, alors, audit revêtement intumescent 4 d'accomplir pleinement sa fonction, de produire pleinement son effet technique et d'obtenir pleinement son résultat sans que cette fonction, que cet effet technique et/ou que ce résultat soit perturbé ou amoindri par la présence d'un autre composé chimique, notamment un adhésif.

Ainsi et étant donné que l'adhésif 3 se situe uniquement sur la première face 20 de la pastille 2 et, donc, de l'autre côté de cette pastille 2 par rapport au côté où se situe le revêtement intumescent 4, cette caractéristique permet, alors avantageusement, audit revêtement intumescent 4, sous l'effet de la chaleur, voire des flammes, de gonfler et de constituer, alors et d'un côté de la pastille 2, une barrière qui protège efficacement et de manière optimale l'adhésif 3 (qui est situé de l'autre côté de la pastille 2) vis-à-vis de la chaleur, voire des flammes. Cet adhésif 3 conserve, alors, toute son intégrité ainsi que toutes ses propriétés adhésives. Cette caractéristique présente, encore, l'avantage que, sous l'effet de la chaleur (voire des flammes), ce revêtement intumescent 4 gonfle et constitue, alors, également, une barrière qui protège efficacement et de manière optimale la pastille 2 vis-à-vis des flammes. Cette pastille 2 résiste, alors, aux flammes et conserve son intégrité pendant plusieurs minutes.

Ce revêtement intumescent 4 comporte, d'une part, au moins un composé chimique qui est un acide (par exemple de l'acide borique, de l'acide phosphorique ou de l'acide sulfurique) ou qui est un catalyseur acide (par exemple un ester d'acide phosphorique ou un ester d'acide sulfurique) ou qui génère au moins un acide sous l'effet d'une température supérieure à 150°C (par exemple un sel d'acide phosphorique, du phosphate d'ammonium ou du polyphosphate d'ammonium).

D'autre part, ce revêtement intumescent 4 comporte au moins un composé chimique qui génère au moins un composé carboné (plus particulièrement qui génère du carbone), ceci sous l'action de l'acide mentionné ci-dessus.

Un tel composé chimique (qui génère au moins un composé carboné) peut être un polyalcool (par exemple le pentaérythriol), un sucre simple ou un polysaccharide.

D'autre part encore, ce revêtement intumescent 4 comporte au moins un composé chimique qui génère des gaz sous l'effet de la chaleur.

A ce propos, on observera qu'un tel composé chimique (qui génère des gaz sous l'effet de la chaleur) peut être un composé chimique qui, sous l'action de la chaleur, se décompose et qui, en se décomposant, gonfle.

De manière alternative ou (et de préférence) additionnelle, un tel composé chimique (qui génère des gaz sous l'effet de la chaleur) peut, par exemple, être de la mélamine, de la guanidine ou de l'urée.

De manière alternative ou (et de préférence) additionnelle, un tel composé chimique (qui génère des gaz sous l'effet de la chaleur) peut être choisi en sorte que le gaz généré soit, par exemple, de l'ammoniac (NH₃) ou du dioxyde de carbone (CO₂).

Encore une autre caractéristique concerne le fait que le revêtement intumescent 4 présente une épaisseur comprise entre 50 microns et 600 microns (c'est à dire comprise entre 50*10⁻⁶m et 600*10⁻⁶m), de préférence comprise entre 100 microns et 250 microns (c'est à dire comprise entre 100*10⁻⁶m et 250*10⁻⁶m).

De manière alternative ou (et de préférence) additionnelle, le revêtement intumescent 4 comporte des particules, d'une part, qui sont en un matériau intumescent et, d'autre part, dont la taille est comprise entre 50 microns et 2000 microns (c'est-à-dire comprise entre 50*10⁻⁶m et 2000*10⁻⁶m). De telles particules peuvent adopter la forme de sphères et/ou de lamelles.

De manière alternative ou (et de préférence) additionnelle, le revêtement intumescent 4 présente une masse volumique comprise entre 1,1 g/cm³ et 2g/cm³ (c'est-à-dire comprise entre 1100 kg/m³ et 2000 kg/m³), de préférence comprise entre 1,2 g/cm³ et 1,5g/cm³ (c'est-à-dire comprise entre 1200 kg/m³ et 1500 kg/m³).

Encore une autre caractéristique concerne le fait que le dispositif d'obturation adhésif réfractaire 1 présente un module d'Young compris entre 0,1GPa et 10GPa (c'est-à-dire compris entre 0,1* 10⁹ Pa et 10* 10⁹ Pa), de préférence compris entre 0,5GPa et 1,5GPa (c'est-à-dire compris entre 0,5* 10⁹ Pa et 1,5* 10⁹ Pa). Ce module d'Young peut être déterminé conformément à la norme AFERA 5004.

L'invention concerne, également, un élément E de véhicule, notamment de véhicule automobile (plus particulièrement de véhicule automobile électrique ou hybride), comportant, d'une part, une coque, qui est destinée à contenir au moins une batterie, qui présente au moins une ouverture traversante O ainsi que, d'une part, au moins une paroi interne Pi orientée en direction du volume interne de la coque et, d'autre part, au moins une paroi externe Pe orientée dans une direction opposée au volume interne.

Cet élément E de véhicule comporte, alors, également, au moins un dispositif d'obturation adhésif réfractaire 1, qui présente les caractéristiques décrites ci-dessus, qui obture ladite au moins une ouverture traversante O, et qui est collé sur la paroi interne Pi de la coque, plus particulièrement sur une bordure, que comporte la paroi interne Pi, et qui qui borde ladite au moins une ouverture traversante O.

Ces caractéristiques permettent, avantageusement et en cas d'incendie qui se déclare à l'intérieur de la coque, au revêtement intumescent 4 de gonfler (sous l'effet de la chaleur et/ou des flammes) et, ainsi, de protéger la pastille 2 et l'adhésif 3 ce qui permet d'éviter que l'ouverture traversante O de la coque soit traversée par des fumées et/ou des flammes qui restent alors confinées à l'intérieur de la coque et ne se propagent pas à l'extérieur de cette coque.

De manière alternative ou additionnelle, cet élément E de véhicule comporte au moins un dispositif d'obturation adhésif réfractaire 1, qui présente les caractéristiques décrites ci-dessus, qui obture ladite au moins une ouverture traversante O, et qui est collé sur la paroi externe Pe de la coque, plus particulièrement sur une bordure, que comporte la paroi externe Pe, et qui borde ladite au moins une ouverture traversante O.

Ces caractéristiques permettent, avantageusement et en cas d'incendie qui se déclare à l'extérieur de la coque, au revêtement intumescent 4 de gonfler (sous l'effet de la chaleur et/ou des flammes) et, ainsi, de protéger la pastille 2 et l'adhésif 3 ce qui permet d'éviter que l'ouverture traversante O de la coque soit traversée par de l'eau et que cette eau pénètre alors à l'intérieur de la coque qui contient des batteries qui, en présence d'eau, sont susceptibles d'exploser.

L'invention concerne, également, un procédé de fabrication d'un dispositif d'obturation adhésif réfractaire 1, plus particulièrement le dispositif d'obturation adhésif réfractaire 1 décrit ci-dessus et qui présente au moins une partie des caractéristiques décrites ci-dessus.

Ce procédé de fabrication comporte :
- une étape d'application d'un adhésif 3 sur au moins une partie d'une première face d'un film qui est en un matériau métallique ;
- une étape de recouvrement par un revêtement intumescent 4 d'au moins une partie d'une deuxième face du film ;
- une étape de découpe d'au moins un dispositif d'obturation adhésif réfractaire 1 dans un ensemble qui comporte le film, l'adhésif 3 et le revêtement intumescent 4.

A ce propos, on observera que le film, qui est en un matériau métallique, présente des caractéristiques (métal, alliage métallique, épaisseur) qui sont celles de la pastille 2 décrite ci-dessus.

Selon une caractéristique particulière dudit procédé de fabrication, l'étape d'application de l'adhésif 3 comporte une étape de laminage, sur ladite au moins une partie de la première face du film, soit d'une couche d'adhésif 3, soit d'au moins un anneau d'adhésif 3.

Encore une autre caractéristique de ce procédé de fabrication consiste en ce que ce procédé peut comporter, préalablement à l'étape d'application de l'adhésif 3 sur ladite au moins une partie de la première face du film, une étape de protection d'une face distale de l'adhésif 3 qui est opposée à une face proximale de l'adhésif 3 destinée à être appliquée sur le film. Une telle étape de protection peut être assurée en déposant un support antiadhérent sur la face distale de l'adhésif 3 qui est opposée à la face proximale de l'adhésif 3 destinée à être appliquée sur le film.

Encore une autre caractéristique consiste en ce que le procédé de fabrication peut comporter, préalablement à l'étape d'application de l'adhésif 3 sur ladite au moins une partie de la première face du film, une étape de découpage d'au moins un anneau adhésif 3 (voire, et de préférence, d'une pluralité d'anneaux adhésifs 3), ceci dans un ensemble qui comporte, d'une part, l'adhésif 3 et, d'autre part, un support déposé sur la face distale de l'adhésif 3 qui est opposée à la face proximale de l'adhésif 3 destinée à être appliquée sur le film.

A ce propos, on observera que cette étape de découpe peut intervenir postérieurement à l'étape de protection de la face distale de l'adhésif 3 par le support antiadhérent de protection déposé sur cette face distale de l'adhésif 3 au cours de cette étape de protection.

En ce qui concerne l'étape de recouvrement, celle-ci comporte une étape de projection, sur au moins une partie de la deuxième face du film, d'un mélange qui contient, d'une part, au moins une composition chimique intumescente et, d'autre part, de l'air. La projection de ce mélange est assurée sous une pression (plus particulièrement une basse pression) qui est comprise entre 0,5 bars et 2 bars (c'est-à-dire comprise entre 0,5*10⁵ Pa et 2*10⁵Pa), de préférence comprise entre 0,8 bars et 1,5 bars (c'est à dire comprise entre 0,8*10⁵ Pa et 1,5*10⁵Pa), notamment de l'ordre de 1 bar.

A ce propos, on observera que, préalablement à l'étape de recouvrement, le procédé de fabrication peut, encore, comporter une étape de maintien de la composition chimique intumescente sous une pression comprise entre 2 bars et 5 bars (c'est-à-dire comprise entre 2*10⁵ Pa et 5*10⁵Pa), de préférence de l'ordre de 3 bars (c'est-à-dire de l'ordre de 3*10⁵Pa).

De manière alternative ou (et de préférence) additionnelle, préalablement à l'étape de recouvrement, le procédé de fabrication peut, encore, comporter une étape de maintien de la composition chimique intumescente sous agitation.

En ce qui concerne ladite composition chimique intumescente, celle-ci contient, d'une part, au moins un solvant (plus particulièrement de l'eau et/ou un solvant organique et/ou dont le pourcentage massique est compris entre 20 et 50%, de préférence compris entre 35 et 45%, notamment de l'ordre de 40%), d'autre part, au moins un liant (plus particulièrement un liant de type acrylique et/ou de type vinylique et/ou dont le pourcentage massique est compris entre 20 et 50%, de préférence compris entre 30 et 40%, notamment de l'ordre de 35%) et, d'autre part encore, au moins un matériau intumescent (plus particulièrement dont le pourcentage massique est compris entre 10 et 40%, de préférence compris entre 20 et 30%, notamment de l'ordre de 25%), ceci sachant que la somme des pourcentages massiques des composants (au moins un solvant, au moins un liant, au moins un matériau intumescent) de la composition chimique intumescente est de 100%.

De manière additionnelle, la composition chimique intumescente peut présenter une viscosité à 25°C comprise entre 5 Pa.s et 50 Pa.s, de préférence comprise entre 10 Pa.s et 20 Pa.s.

L'invention concerne, également, une installation qui est configurée pour mettre en oeuvre le procédé de fabrication décrit ci-dessus.

Cette installation comporte, d'une part, au moins un récipient (plus particulièrement sous la forme d'une cuve ou analogue) qui est configuré pour contenir une composition chimique intumescente (plus particulièrement la composition chimique intumescente décrite ci-dessus) ainsi que pour maintenir cette composition chimique intumescente sous agitation et/ou sous une pression comprise entre 2 bars et 5 bars (c'est-à-dire comprise entre 2*10⁵ Pa et 5*10⁵Pa), de préférence de l'ordre de 3 bars (c'est-à-dire de l'ordre de 3*10⁵Pa)

D'autre part, cette installation comporte un système de projection, qui est raccordé audit au moins un récipient, et qui est configuré pour projeter au moins la composition chimique intumescente sous une pression comprise entre 0,5 bars et 2 bars (c'est-à-dire comprise entre 0,5*10⁵ Pa et 2*10⁵Pa), de préférence de l'ordre de 1 bar (c'est-à-dire de l'ordre de 10⁵Pa).

En fait, le système de projection est configuré pour projeter le mélange, qui est décrit ci-dessus, et qui contient, d'une part, au moins une composition chimique intumescente (qui présente les caractéristiques décrites ci-dessus) et, d'autre part, de l'air.

Selon une autre caractéristique, le système de projection comporte une buse qui est à jet tournant et/ou qui présente un diamètre compris entre 1,5 mm (millimètres) et 4 mm (millimètres), plus particulièrement compris entre 2,5 mm (millimètres) et 3mm (millimètres), de préférence de l'ordre de 2, 8mm (millimètres).

Une telle buse permet, avantageusement, d'obtenir un éclatement des gouttes de la composition chimique intumescente permettant d'obtenir un revêtement intumescent 4 qui présente les caractéristiques décrites ci-dessus.

## Revendications

1. Dispositif d'obturation adhésif réfractaire (1) d'une ouverture traversante (O) que comporte un élément (E) d'un bâtiment ou un élément (E) d'un véhicule, ce dispositif d'obturation adhésif réfractaire (1) comporte, d'une part, une pastille (2), qui est en un matériau métallique, qui présente une épaisseur comprise entre 10 microns et 150 microns, et qui présente une première face (20) ainsi qu'une deuxième face (21), d'autre part, un adhésif (3), qui couvre au moins une partie de la première face (20) de la pastille (2), et qui est configuré pour adhérer sur ledit élément (E), et, d'autre part encore, un revêtement intumescent (4) qui couvre au moins une partie de la deuxième face (21) de la pastille (2).

2. Dispositif d'obturation adhésif réfractaire (1) selon la revendication 1, **caractérisé par le fait que** la pastille (2), d'une part, est en zinc ou en un alliage à base de zinc et, d'autre part, présente une épaisseur comprise entre 50 microns et 150 microns, de préférence de l'ordre de 80 microns.

3. Dispositif d'obturation adhésif réfractaire (1) selon la revendication 1, **caractérisé par le fait que** la pastille (2), d'une part, est en aluminium ou en un alliage d'aluminium et, d'autre part, présente une épaisseur comprise entre 20 microns et 100 microns, de préférence comprise entre 35 microns et 50 microns.

4. Dispositif d'obturation adhésif réfractaire (1) selon la revendication 1, **caractérisé par le fait que** la pastille (2), d'une part, est en cuivre ou en un alliage de cuivre et, d'autre part, présente une épaisseur comprise entre 10 microns et 25 microns, de préférence de l'ordre de 18 microns.

5. Dispositif d'obturation adhésif réfractaire (1) selon l'une quelconque des revendications précédentes, **caractérisé par le fait que** l'adhésif (3), d'une part, est à base d'au moins un polymère acrylique réticulable et, d'autre part, présente une épaisseur comprise entre 20 microns et 120 microns, de préférence comprise entre 30 microns et 100 microns.

6. Dispositif d'obturation adhésif réfractaire (1) selon la revendication 5, **caractérisé par le fait que** l'adhésif (3) est à base d'au moins un polymère acrylique auto-réticulable, plus particulièrement par chélates métalliques.

7. Dispositif d'obturation adhésif réfractaire (1) selon l'une quelconque des revendications précédentes, **caractérisé par le fait que** l'adhésif (3) présente une perméabilité à la vapeur d'eau inférieure à 200g/m²/24h et/ou à 5 Perms.

8. Dispositif d'obturation adhésif réfractaire (1) selon l'une quelconque des revendications précédentes, **caractérisé par le fait que** le revêtement intumescent (4) comporte, d'une part, au moins un composé chimique qui est un acide ou qui est un catalyseur acide ou qui génère au moins un acide sous l'effet d'une température supérieure à 150°C, d'autre part, au moins un composé chimique qui génère au moins un composé carboné sous l'action de l'acide et, d'autre part encore, au moins un composé chimique qui génère des gaz sous l'effet de la chaleur.

9. Dispositif d'obturation adhésif réfractaire (1) selon l'une quelconque des revendications précédentes, **caractérisé par le fait que** le revêtement intumescent (4) présente une épaisseur comprise entre 50 microns et 600 microns, de préférence comprise entre 100 microns et 250 microns.

10. Dispositif d'obturation adhésif réfractaire (1) selon l'une quelconque des revendications précédentes, **caractérisé par le fait que** le revêtement intumescent (4) comporte des particules, qui sont en un matériau intumescent, et dont la taille est comprise entre 50 microns et 2000 microns.

11. Dispositif d'obturation adhésif réfractaire (1) selon l'une quelconque des revendications précédentes, **caractérisé par le fait que** le revêtement intumescent (4) présente une masse volumique comprise entre 1,1 g/cm³ et 2g/cm³, de préférence comprise entre 1,2 g/cm³ et 1,5g/cm³.

12. Dispositif d'obturation adhésif réfractaire (1) selon l'une quelconque des revendications précédentes, **caractérisé par le fait qu'**il présente un module d'Young compris entre 0,1GPa et 10GPa, de préférence compris entre 0,5GPa et 1,5GPa.

13. Elément (E) de véhicule, notamment de véhicule automobile, comportant, d'une part, une coque, qui est destinée à contenir au moins une batterie, qui présente au moins une ouverture traversante (O) ainsi qu'au moins une paroi interne (Pi) orientée en direction du volume interne de la coque et au moins une paroi externe (Pe) orientée dans une direction opposée au volume interne, et, d'autre part, au moins un dispositif d'obturation adhésif réfractaire (1), qui est conforme à l'une quelconque des revendications précédentes, qui obture ladite au moins une ouverture traversante, et qui est collé sur la paroi interne (Pi) et/ou sur la paroi externe (Pe) de la coque.

14. Procédé de fabrication d'un dispositif d'obturation adhésif réfractaire (1), ce procédé comporte :
- une étape d'application d'un adhésif (3) sur au moins une partie d'une première face d'un film qui est en un matériau métallique ;
- une étape de recouvrement par un revêtement intumescent (4) d'au moins une partie d'une deuxième face du film ;
- une étape de découpe d'au moins un dispositif d'obturation adhésif réfractaire (1) dans un ensemble qui comporte le film, l'adhésif (3) et le revêtement intumescent (4).

15. Procédé de fabrication d'un dispositif d'obturation adhésif réfractaire (1) selon la revendication 14, **caractérisé par le fait que** l'étape d'application de l'adhésif (3) comporte une étape de laminage, sur ladite au moins une partie de la première face du film, soit d'une couche d'adhésif (3), soit d'au moins un anneau d'adhésif (3).

16. Procédé de fabrication d'un dispositif d'obturation adhésif réfractaire (1) selon la revendication 14, **caractérisé par le fait que** l'étape de recouvrement comporte une étape de projection, sur au moins une partie de la deuxième face du film, d'un mélange qui contient, d'une part, au moins une composition chimique intumescente et, d'autre part, de l'air, ceci sous une pression comprise entre 0,5 bars et 2 bars.

17. Procédé de fabrication d'un dispositif d'obturation adhésif réfractaire (1) selon la revendication 16, **caractérisé par le fait que**, préalablement à l'étape de recouvrement, le procédé de fabrication comporte une étape de maintien de la composition chimique intumescente sous agitation et/ou sous une pression comprise entre 2 bars et 5 bars, de préférence de l'ordre de 3 bars.

18. Procédé de fabrication selon l'une quelconque des revendications 16 ou 17, **caractérisé par le fait que** la composition chimique intumescente contient, d'une part, au moins un solvant dont le pourcentage massique est compris entre 20 et 50%, d'autre part, au moins un liant dont le pourcentage massique est compris entre 20 et 50% et, d'autre part encore, au moins un matériau intumescent dont le pourcentage massique est compris entre 10 et 40%.

19. Installation configurée pour mettre en oeuvre le procédé de fabrication selon l'une quelconque des revendications 14 à 18, **caractérisée par le fait qu'**elle comporte, d'une part, au moins un récipient qui est configuré pour contenir une composition chimique intumescente ainsi que pour maintenir cette composition chimique intumescente sous agitation et/ou sous une pression comprise entre 2 bars et 5 bars, de préférence de l'ordre de 3 bars et, d'autre part, un système de projection, qui est raccordé audit au moins un récipient, et qui est configuré pour projeter au moins la composition chimique intumescente sous une pression comprise entre 0,5 bars et 2 bars, de préférence de l'ordre de 1 bars.

20. Installation selon la revendication 19, **caractérisée par le fait que** le système de projection comporte une buse qui est à jet tournant et/ou qui présente un diamètre compris entre 1,5 mm et 4 mm, plus particulièrement compris entre 2,5 mm et 3mm, de préférence de l'ordre de 2,8 mm.
